# EUROPÄISCHE PATENTSCHRIFT

(11) **EP 1 002 001 B1**
(45) Veröffentlichungstag und Bekanntmachung des Hinweises auf die Patenterteilung: **27.03.2002**
(21) Anmeldenummer: 98941363.8
(22) Anmeldetag: 20.07.1998
(51) Int. Cl.: C08G 18/79, C08G 18/70, C08G 18/08, C09D 175/06

(54) **WÄSSERIGE DISPERSIONEN ENTHALTEND POLYURETHANE MIT CARBODIIMIDGRUPPEN**
AQUEOUS DISPERSIONS CONTAINING POLYURETHANES WITH CARBODIIMIDE GROUPS
DISPERSIONS AQUEUSES CONTENANT DES POLYURETHANES AVEC DES GROUPES CARBODIIMIDE

(30) Priorität: 31.07.1997 DE 19733044; 15.04.1998 DE 19816528
(43) Veröffentlichungstag der Anmeldung: 24.05.2000
(73) Patentinhaber: BASF AKTIENGESELLSCHAFT, 67056 Ludwigshafen (DE)
(72) Erfinder: BEUTLER, Kuno, D-67245 Lambsheim (DE); HÄBERLE, Karl, D-67346 Speyer (DE); HUMMERICH, Rainer, D-67551 Worms (DE); LICHT, Ulrike, D-68163 Mannheim (DE); KOKEL, Nicolas, D-67069 Ludwigshafen (DE); TREIBER, Reinhard, D-69181 Leimen (DE); KAEHS, Helmut, D-67150 Niederkirchen (DE); MOSSBACH, Ralf, D-67466 Lambrecht (DE); GÖTZ, Thomas, D-76773 Kuhardt (DE)
(86) Internationale Anmeldenummer: EP9804483
(87) Internationale Veröffentlichungsnummer: WO9906459

(56) Entgegenhaltungen:
- EP-A- 0 198 343
- WO-A-95/08583
- DE-A- 2 446 440

## Beschreibung

Die vorliegende Erfindung betrifft wässerige Dispersionen, enthaltend ein Polyurethan, welches Carbodiimid-Struktureinheiten der Formel (I)

-N=C=N- (1)

enthält.

Weiterhin betrifft die Erfindung Verfahren zur Beschichtung, Verklebung und Imprägnierung von Gegenständen aus unterschiedlichen Materialien mit diesen Dispersionen sowie die mit diesen Dispersionen beschichteten, verklebten und imprägnierten Gegenstände.

Die Verwendung von wässerigen Dispersionen, die Polyurethane enthalten (kurz: PUR-Dispersionen), zur Beschichtung von Substraten wie Textil oder Leder ist seit langem bekannt. Aufgrund ihrer hervorragenden mechanischen Eigenschaften werden hierzu bevorzugt PUR-Dispersionen auf Basis von Polyesterolen eingesetzt.

In der WO 94/06852 wird empfohlen, zur Beschichtung von beliebigen Substraten, bevorzugt Leder, wässerige Dispersionen einzusetzen, die ein ionomeres Polyurethan und einen Schaumstabilisator enthalten. Gegebenenfalls kann diese Dispersion mit einer weiteren Polymerdispersion abgemischt sein und weitere Hilfs- und Zusatzstoffe wie Farbstoffe, Verlaufs- und Netzmittel, Antiklebemittel, Weichmacher und Mattierungsmittel enthalten. Die Anwendung der Dispersion als Beschichtungsmittel erfolgt, indem man sie mechanisch aufschäumt, auf das Substrat aufträgt und den Schaum trocknet.

Aus EP-A-276482 werden wässerige Dispersionen zur Herstellung von beschichteten Textilien beschrieben. Die wesentlichen Komponenten sind: eine unter 70°C filmbildende Polyurethandispersion und eine unter 70°C nicht filmbildende Dispersion eines Polymeren mit einem Schmelzpunkt >70°C, beispielsweise ein Acrylnitril-Styrol-Copolymer.

Die aus dem Stand der Technik bekannten Textilien eignen sich jedoch nur bedingt für den Einsatz im Bautenschutz und insbesondere als Dachbahnen.

Dachbahnen müssen ein komplexes Anforderungsprofil erfüllen; gefordert wird häufig folgende Eigenschaftskombination:
- hohe mechanische Festigkeit und Elastizität sowohl in der Kälte als auch in der Wärme, da Dächer jahreszeitabhängig starken Temperaturschwankungen unterworfen sind
- hohe Wasserdichtigkeit
- gute Wasserdampfdurchlässigkeit
- gegebenenfalls Einstufung in eine möglichst hohe Brandschutzklasse und
- Abwesenheit von chlorierten Produkten, da von einem Teil der Öffentlichkeit Produkte aus chlorierten Polymeren gemieden werden, weil bei ihm der Eindruck entstanden ist, sie seien aus ökologischen Gründen bedenklich.
- keine merklichen Einbußen in den vorgenannten Eigenschaften über einen Zeitraum mehrerer Jahre hinweg unter Gebrauchsbedingungen, insbesondere auch unter dem Einfluß einer feucht-warmen Atmosphäre.

Aus der US 4 113 676 ist bekannt, daß wässerige PUR-Dispersionen durch den Zusatz von Monocarbodiimiden, die keine weiteren funktionellen Gruppen tragen, gegen hydrolytischen Abbau geschützt werden können. Nachteilig an diesen Systemen ist jedoch die Anwesenheit der niedermolekularen Carbodiimide, die beispielsweise aus der Beschichtung migrieren und somit zu hygienischen Problemen führen können. Weiterhin ist nachteilig, daß die durch Reaktion des CDI mit Carboxylgruppen gebildeten Acrylharnstoffe in Amid und das dem Carbodiimid zugrundeliegende Isocyanat spalten (Williams & Ibrahim; Chem. Rev. 81, 603 (1981), das ebenfalls migrieren und zu Problemen führen kann.

Die WO 96/08 524, EP-A-207 414 und DE-A-4 039 193 beschreiben wässerige Dispersionen von Acrylharnstoff-haltigen Polyisocyanat-Additionsprodukten. Zu deren Herstellung werden zunächst Carbodiimid-haltige Polyurethane oder Präpolymere hergestellt und die Carbodiimidgruppen vor der Dispergierung der Polyurethane mit Carbonsäuren wie Stearinsäure zu den Acylharnstoffgruppen umgesetzt.

Es bestand daher die Aufgabe, PUR-Dispersionen zu finden, die die Nachteile des Standes der Technik nicht aufweisen und aus denen sich Beschichtungen und Filme herstellen lassen, die bei Lagerung unter feucht-warmen Bedingungen keine Einbuße ihrer mechanischen Eigenschaften, insbesondere ihrer Reißspannung, erleiden. Weiterhin sollen sich diese Dispersionen für die Herstellung von beschichteten Textilien, die als Dachunterspannbahnen einsetzbar sind, eignen.

Demgemäß wurden die eingangs genannten Dispersionen, Verfahren zur Herstellung von Beschichtungen, Verklebungen und Imprägnierungen sowie die beschichteten, verklebten und beschichteten Gegenstände gefunden.

Die erfindungsgemäßen Dispersionen enthalten die Carbodiimid-Struktureinheiten der Formel (I) bevorzugt in Mengen von 5 bis 200, besonders bevorzugt in Mengen von 5 bis 150 und ganz besonders bevorzugt in Mengen von 10 bis 100 mmol pro kg Polyurethan.

Besonders einfach lassen sich die Carbodiimid-Struktureinheiten der Formel (I) in die erfindungsgemäße wässerige Polyurethandispersion einbauen, indem man beim Aufbau der Polyurethane Diisocyanate (a1.1) verwendet oder mitverwendet, die im statistischen Mittel 1 bis 10, bevorzugt 1 bis 4 Struktureinheiten der Formel (I) aufweisen.

Geeignete Diisocyanatocarbodiimide (a1.1) sind beispielsweise solche der allgemeinen Formel (Ia1.1)

OCN-(R¹-N=C=N)m-R¹-NCO (Ia1)

in der R¹ für einen zweiwertigen, ggf. Urethan-, Ester- und/oder Ethergruppen aufweisenden Kohlenwasserstoffrest, wie er durch Entfernung der Isocyanatgruppen aus einem einfachen organischen Isocyanat oder einem Urethangruppen und ggf. Ether- oder Estergruppen aufweisenden Präpolymer, das endständig Isocyanat-gruppen trägt, erhalten wird, wobei bei Vorliegen von mehreren Resten R¹ im gleichen Molekül gleichzeitig auch unterschiedliche, der genannten Definition entsprechende Reste R¹ vorliegen können und m für eine ganze oder (im statistischen Mittel) gebrochene Zahl von 1 bis 10, vorzugsweise von 1 bis 4, steht.

Bevorzugt leiten sich die Reste R1 durch Abstraktion der Isocyanatgruppen von Monomeren (a1) ab, bei denen es sich um die Diisocyanate handelt, die üblicherweise in der Polyurethanchemie eingesetzt werden.

Insbesondere zu nennen sind als Monomere (a1) Diisocyanate X(NCO)₂, wobei X für einen aliphatischen Kohlenwasserstoffrest mit 4 bis 12 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanato-diphenylmethan, 2,4'-Diisocyanato-diphenylmethan, p-Xylylendiisocyanat, Tetramethylxylylendiisocyanat (TMXDI), die Isomeren des Bis-(4-isocyanatocyclohexyl)methans (HMDI) wie das trans/trans-, das cis/ cis- und das cis/trans-Isomere sowie aus diesen Verbindungen bestehende Gemische.

Als Gemische dieser Isocyanate sind besonders die Mischungen der jeweiligen Strukturisomeren von Diisocyanatotoluol und Diisocyanato-diphenylmethan von Bedeutung, insbesondere ist die Mischung aus 80 mol-% 2,4-Diisocyanatotoluol und 20 mol-% 2,6-Diisocyanatotoluol geeignet. Weiterhin sind die Mischungen von aromatischen Isocyanaten wie 2,4 Diisocyanatotoluol und/oder 2,6-Diisocyanatotoluol mit aliphatischen oder cycloaliphatischen Isocyanaten wie Hexamethylendiisocyanat, HMDI oder IPDI besonders vorteilhaft, wobei das bevorzugte Mischungsverhältnis der aliphatischen zu aromatischen Isocyanate 4 : 1 bis 1 : 4 beträgt.

Bei den Resten R1, die sich durch Abstraktion der Isocyanat-gruppen aus einem Urethangruppen, ggf. Ether- oder Estergruppen und endständige Isocyanatgruppen aufweisenden Präpolymer handelt es sich bevorzugt um solche, die aus den Diolen (b1) und den Diisocyanaten (a1.2) aufgebaut sind.

Die Herstellung der Monomere (a1.1) ist an sich bekannt und wird z.B. in den US 2 840 589, 2 941 966 EP-A-628 541 sowie von P.W. Campbell und K.C. Smeltz in Journal of Organic Chemistry, 28, 2069 (1963) beschrieben. Besonders schonend und frei von Nebenprodukten lassen sich Diisocyanatocarbodiimide auch durch eine Heterogenkatalyse gemäß den deutschen Offenlegungsschriften 2 504 400 und 2 552 350 herstellen. Die Carbodiimidisierung von Diisocyanaten in Gegenwart sehr geringer Mengen an Phospholinoxid unter anschließender Blockierung des Katalysators mit Säurechloriden wird in der DE-OS 2 653 120 beschrieben.

Im allgemeinen werden die Diisoocyanate (a1.2) außer zur Herstellung der Diisocyanate (a1.1) auch direkt zum Aufbau der Polyurethane, die in erfindungsgemäßen Polyurethandispersionen enthalten sind, eingesetzt, da zum Aufbau der Polyurethane häufig mehr Isocyanat benötigt wird als zur Einführung der Carbodiimid-Gruppen erforderlich ist.

Zum Aufbau der Polyurethane kann man als Verbindungen (a1.2) außer den vorgenannten auch Isocyanate einsetzen, die neben den freien Isocyanatgruppen weitere verkappte Isocyanatgruppen, z.B. Uretdiongruppen tragen.

Im Hinblick auf gute Filmbildung und Elastizität kommen als Diole (b1) vornehmlich höhermolekulare Diole (b1.1) in Betracht, die ein Molekulargewicht von etwa 500 bis 5000, vorzugsweise von etwa 1000 bis 3000 g/mol haben.

Bei den Diolen (b1.1) handelt es sich insbesondere um Polyesterpolyole, die z.B. aus Ullmanns Encyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt: Korksäure, Azelainsäure, Phthalsäure, Isophthalsäure, Terephthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel HOOC- (CH₂)_{y}-COOH, wobei y eine Zahl von 1 bis 20, bevorzugt eine gerade Zahl von 2 bis 20 ist, z.B. Bernsteinsäure, Adipinsäure, Sebacinsäure und Dodecandicarbonsäure.

Als mehrwertige Alkohole kommen z.B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglykol, Butan-1,4-diol, Hexan-1,6-diol, Octan-1,8-diol und Dodecan-1,12- diol. Weiterhin bevorzugt sind Neopentylglykol und Pentandiol-1,5.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caprolacton, β-Propiolacton, γ-Butyrolacton und/ oder Methyl-ε-caprolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Daneben kommen als Monomere (b1.1) Polyetherdiole in Betracht. Sie sind insbesondere durch Polymerisation von Ethylenoxid, Propylenoxid, Butylenoxid, Tetrahydrofuran, Styroloxid oder Epichlorhydrin mit sich selbst, z.B. in Gegenwart von BF₃ oder durch Anlagerung dieser Verbindungen gegebenenfalls im Gemisch oder nacheinander, an Startkomponenten mit reaktionsfähigen Wasserstoffatomen, wie Alkohole oder Amine, z.B. Wasser, Ethylenglykol, Propan-1,2-diol, Propan-1,3-diol, 1,2-Bis(4-hydroxydiphenyl)-propan oder Anilin erhältlich. Besonders bevorzugt ist Polytetrahydrofuran eines Molekulargewichts von 240 bis 5000, und vor allem 500 bis 4500.

Ebenfalls geeignet sind Polyhydroxyolefine, bevorzugt solche mit 2 endständigen Hydroxylgruppen, z.B. α,-ω-Dihydroxypolybutadien, α, - ω--Dihydroxypolymethacrylester oder α,-ω--Dihydroxypolyacrylester als Monomere (c1). Solche Verbindungen sind beispielsweise aus der EP-A-0622378 bekannt. Weitere geeignete Polyole sind Polyacetale, Polysiloxane und Alkydharze.

Die Polyole können auch als Gemische im Verhältnis 0,1 : 1 bis 1:9 eingesetzt werden.

Die Härte und der Elastizitätsmodul der Polyurethane lassen sich erhöhen, wenn als Diole (b1) neben den Diolen (b1.1) noch niedermolekulare Diole (b1.2) mit einem Molekulargewicht von etwa 62 bis 500, vorzugsweise von 62 bis 200 g/mol, eingesetzt werden.

Als Monomere (b1.2) werden vor allem die Aufbaukomponenten der für die Herstellung von Polyesterpolyolen genannten kurzkettigen Alkandiole eingesetzt, wobei die unverzweigten Diole mit 2 bis 12 C-Atomen und einer gradzahligen Anzahl von C-Atomen sowie Pentan-1,5-diol und Neopentylglykol bevorzugt werden.

Der Anteil der Diole (b1.1) beträgt, bezogen auf die Gesamtmenge der Diole (b1) 10 bis 100 mol-% und der Anteil der Monomere (b1.2), bezogen auf die Gesamtmenge der Diole (b1) 0 bis 90 mol-%. Besonders bevorzugt beträgt das Verhältnis der Diole (b1.1) zu den Monomeren (b1.2) 0,1 : 1 bis 5:1, besonders bevorzugt 0,2 : 1 bis 2 : 1.

Um die Wasserdispergierbarkeit der Polyurethane zu erreichen, sind die Polyurethane neben den Komponenten (a1), (b1) und (d1) aus von den Komponenten (a1), (b1) und (d1) verschiedenen Monomeren (c1), die wenigstens eine Isocyanatgruppe oder wenigstens eine gegenüber Isocyanatgruppen reaktive Gruppe und darüberhinaus wenigstens eine hydrophile Gruppe oder eine Gruppe, die sich in eine hydrophile Gruppe überführen läßt, tragen, aufgebaut. Im folgenden Text wird der Begriff "hydrophile Gruppen oder potentiell hydrophile Gruppen" mit "(potentiell) hydrophile Gruppen" abgekürzt. Die (potentiell) hydrophilen Gruppen reagieren mit Isocyanaten wesentlich langsamer als die funktionellen Gruppen der Monomere, die zum Aufbau der Polymerhauptkette dienen.

Der Anteil der Komponenten mit (potentiell) hydrophilen Gruppen an der Gesamtmenge der Komponenten (a1), (b1), (c1), (d1) und (e1) wird im allgemeinen so bemessen, daß die Molmenge der (potentiell) hydrophilen Gruppen, bezogen auf die Gewichtsmenge aller Monomere (a1) bis (e1), 30 bis 1000, bevorzugt 50 bis 500 und besonders bevorzugt 80 bis 300 mmol/kg beträgt.

Bei den (potentiell) hydrophilen Gruppen kann es sich um nichtionische oder bevorzugt um (potentiell) ionische hydrophile Gruppen handeln.

Als nichtionische hydrophile Gruppen kommen hydrophile Polyalkylenoxid-Reste, insbesondere Polyethylenglykolether aus vorzugsweise 5 bis 100, bevorzugt 10 bis 80 Ethylenoxid-Wiederholungseinheiten, in Betracht. Der Gehalt an Polyethylenoxid-Einheiten beträgt im allgemeinen 0 bis 10, bevorzugt 0 bis 6 Gew.-%, bezogen auf die Gewichtsmenge aller Monomere (a1) bis (e1).

Bevorzugte Monomere mit nichtionischen hydrophilen Gruppen sind hydrophile Polyalkylenoxide, Polyethylenoxidmonoole sowie die Reaktionsprodukte aus einem Polyethylenglykol und einem Diisocyanat, die einen endständig veretherten Polyethylenglykolrest tragen. Derartige Isocyanate sowie Verfahren zu deren Herstellung sind in den Patentschriften US 3 905 929 und US 3 920 598 angegeben.

Ionische hydrophile Gruppen sind vor allem anionische Gruppen wie die Sulfonat-, die Carboxylat- und die Phosphatgruppe in Form ihrer Alkalimetall- oder Ammoniumsalze sowie kationische Gruppen wie Ammonium-Gruppen, insbesondere protonierte tertiäre Aminogruppen oder quartäre Ammoniumgruppen.

Potentiell ionische hydrophile Gruppen sind vor allem solche, die sich durch einfache Neutralisations-, Hydrolyse- oder Quaternisierungsreaktionen in die oben genannten ionischen hydrophilen Gruppen überführen lassen, also z.B. Carbonsäuregruppen oder tertiäre Aminogruppen.

(Potentiell) ionische Monomere (c1) sind z.B. in Ullmanns Encyklopädie der technischen Chemie, 4. Auflage, Band 19, S.311-313 und beispielsweise in der DE-A 1 495 745 ausführlich beschrieben.

Als (potentiell) kationische Monomere (c1) sind vor allem Monomere mit tertiären Aminogruppen von besonderer praktischer Bedeutung, beispielsweise: Tris-(hydroxyalkyl)-amine, N,N'-Bis(hydroxyalkyl)-alkylamine, N-Hydroxyalkyl-dialkylamine, Tris-(aminoalkyl)-amine, N,N'-Bis(aminoalkyl)-alkylamine, N-Aminoalkyl-dialkylamine, wobei die Alkylreste und Alkandiyl-Einheiten dieser tertiären Amine unabhängig voneinander aus 1 bis 6 Kohlenstoffatomen bestehen. Weiterhin kommen tertiäre Stickstoffatome aufweisende Polyether mit vorzugsweise zwei endständigen Hydroxylgruppen, wie sie z.B. durch Alkoxylierung von zwei an Aminstickstoff gebundene Wasserstoffatome aufweisende Amine, z.B. Methylamin, Anilin oder N,N'-Dimethylhydrazin, in an sich üblicher Weise zugänglich sind, in Betracht. Derartige Polyether weisen im allgemeinen ein zwischen 500 und 6000 g/mol liegendes Molgewicht auf.

Diese tertiären Amine werden entweder mit Säuren, bevorzugt starken Mineralsäuren wie Phosphorsäure, Schwefelsäure, Halogenwasserstoffsäuren oder starken organischen Säuren oder durch Umsetzung mit geeigneten Quaternisierungsmitteln wie C₁- bis C₆-Alkylhalogeniden oder Benzylhalogeniden, z.B. Bromiden oder Chloriden, in die Ammoniumsalze überführt.

Als Monomere mit (potentiell) anionischen Gruppen kommen üblicherweise aliphatische, cycloaliphatische, araliphatische oder aromatische Carbonsäuren und Sulfonsäuren in Betracht, die mindestens eine alkoholische Hydroxylgruppe oder mindestens eine primäre oder sekundäre Aminogruppe tragen. Bevorzugt sind Dihydroxyalkylcarbonsäuren, vor allem mit 3 bis 10 Kohlenstoffatomen, wie sie auch in der US-A 3 412 054 beschrieben sind. Insbesondere sind Verbindungen der allgemeinen Formel (d1) 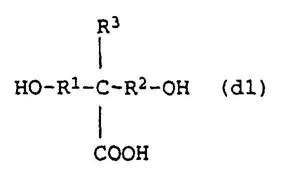 in welcher R¹ und R² für eine C₁- bis C₄-Alkandiyl-Einheit und R³ für eine C₁- bis C₄-Alkyl-Einheit steht und vor allem Dimethylolpropionsäure (DMPA) bevorzugt.

Weiterhin eignen sich entsprechende Dihydroxysulfonsäuren und Dihydroxyphosphonsäuren wie 2,3-Dihydroxypropanphosphonsäure.

Ansonsten geeignet sind Dihydroxylverbindungen mit einem Molekulargewicht über 500 bis 10000 g/mol mit mindestens 2 Carboxylatgruppen, die aus der DE-A 3 911 827 bekannt sind. Sie sind durch Umsetzung von Dihydroxylverbindungen mit Tetracarbonsäuredianhydriden wie Pyromellitsäuredianhydrid oder Cyclopentantetracarbonsäuredianhydrid im Molverhältnis 2 : 1 bis 1,05 : 1 in einer Polyadditionsreaktion erhältlich. Als Dihydroxylverbindungen sind insbesondere die als Kettenverlängerer aufgeführten Monomere (b1.2) sowie die Diole (b1.1) geeignet.

Als Monomere (c1) mit gegenüber Isocyanaten reaktiven Aminogruppen kommen Aminocarbonsäuren wie Lysin, β-Alanin oder die in der DE-A-2034479 genannten Addukte von aliphatischen diprimären Diaminen an α,β-ungesättigte Carbon- oder Sulfonsäuren in Betracht.

Solche Verbindungen gehorchen beispielsweise der Formel (d2)

H₂N-R⁴-NH-R⁵-X (d2)

in der
- R⁴ und R⁵ unabhängig voneinander für eine C₁- bis C₆-Alkandiyl-Einheit, bevorzugt Ethylen
und X für COOH oder SO₃H stehen.

Besonders bevorzugte Verbindungen der Formel (d2) sind die N-(2-Aminoethyl)-2-aminoethancarbonsäure sowie die N-(2-Aminoethyl)-2-aminoethansulfonsäure bzw. die entsprechenden Alkalisalze, wobei Na als Gegenion besonders bevorzugt ist.

Weiterhin besonders bevorzugt sind die Addukte der oben genannten aliphatischen diprimären Diamine an 2-Acrylamido-2-methylpropansulfonsäure, wie sie z.B. in der DE Patentschrift 1 954 090 beschrieben sind.

Sofern Monomere mit potentiell ionischen Gruppen eingesetzt werden, kann deren Überführung in die ionische Form vor, während, jedoch vorzugsweise nach der Isocyanat-Polyaddition erfolgen, da sich die ionischen Monomeren in der Reaktionsmischung häufig nur schwer lösen. Besonders bevorzugt liegen die Sulfonat- oder Carboxylatgruppen in Form ihrer Salze mit einem Alkaliion oder einem Ammoniumion als Gegenion vor, wobei die Kombination Carboylatgruppen mit Ammoniumionen als Gegenionen ganz besonders bevorzugt ist. Als Amine, die zur Neutralisation der Sulfonsäure- oder Carboxylgruppen dienen können, kommen vor allem Triethylamin, Dimethylethanolamin, Trimethylamin oder Ammoniak in Betracht.

Die Monomere (d1), die von den Monomeren (a1) bis (c1) verschieden sind, dienen im allgemeinen der Vernetzung oder der Kettenverlängerung. Es sind im allgemeinen mehr als zweiwertige nicht-phenolische Alkohole, Amine mit 2 oder mehr primären und/ oder sekundären Aminogruppen sowie Verbindungen, die neben einer oder mehreren alkoholischen Hydroxylgruppen eine oder mehrere primäre und/oder sekundäre Aminogruppen tragen.

Alkohole mit einer höheren Wertigkeit als 2, die zur Einstellung eines gewissen Verzweigungs- oder Vernetzungsgrades dienen können, sind z.B. Trimethylolpropan, Glycerin oder Zucker.

Ferner kommen Monoalkohole in Betracht, die neben der Hydroxyl-Gruppe eine weitere gegenüber Isocyanaten reaktive Gruppe tragen wie Monoalkohole mit einer oder mehreren primären und/oder sekundären Aminogruppen, z.B. Monoethanolamin.

Polyamine mit 2 oder mehr primären und/oder sekundären Aminogruppen werden vor allem dann eingesetzt, wenn die Kettenverlängerung bzw. Vernetzung in Gegenwart von Wasser stattfinden soll, da Amine in der Regel schneller als Alkohole oder Wasser mit Isocyanaten reagieren. Das ist häufig dann erforderlich, wenn wässerige Dispersionen von vernetzten Polyurethanen oder Polyurethanen mit hohem Molgewicht gewünscht werden. In solchen Fällen geht man so vor, daß man Präpolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt.

Hierzu geeignete Amine sind im allgemeinen polyfunktionelle Amine des Molgewichtsbereiches von 32 bis 500 g/mol, vorzugsweise von 60 bis 300 g/mol, welche mindestens zwei Aminogruppen, ausgewählt aus der Gruppe der primären und sekundären Aminogruppen, enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyloctan.

Die Amine können auch in blockierter Form, z.B. in Form der entsprechenden Ketimine (siehe z.B. CA-A-1 129 128), Ketazine (vgl. z.B. die US-A 4 269 748) oder Aminsalze (s. US-A 4 292 226) eingesetzt werden. Auch Oxazolidine, wie sie beispielsweise in der US-A 4 192 937 verwendet werden, stellen verkappte Polyamine dar, die für die Herstellung der erfindungsgemäßen Polyurethane zur Kettenverlängerung der Präpolymeren eingesetzt werden können. Bei der Verwendung derartiger verkappter Polyamine werden diese im allgemeinen mit den Präpolymeren in Abwesenheit von Wasser vermischt und diese Mischung anschließend mit dem Dispersionswasser oder einem Teil des Dispersionswassers vermischt, so daß hydrolytisch die entsprechenden Polyamine freigesetzt werden.

Bevorzugt werden Gemische von Di- und Triaminen verwendet, besonders bevorzugt Gemische von Isophorondiamin (IPDA) und Diethylentriamin (DETA). Die Polyurethane enthalten bevorzugt 0 bis 30, besonders bevorzugt 4 bis 25 mol-%, bezogen auf die Gesamtmenge der Komponenten (b1) und (d1) eines Polyamins mit mindestens 2 gegenüber Isocyanaten reaktiven Aminogruppen als Monomere (d1).

Für den gleichen Zweck können auch als Monomere (d1) höher als zweiwertige Isocyanate eingesetzt werden. Handelsübliche Verbindungen sind beispielsweise das Isocyanurat oder das Biuret des Hexamethylendiisocyanats.

Monomere (e1), die gegebenenfalls mitverwendet werden, sind Monoisocyanate, Monoalkohole und monoprimäre und monosekundäre Amine. Im allgemeinen beträgt ihr Anteil maximal 10 mol-%, bezogen auf die gesamte Molmenge der Monomere. Diese monofunktionellen Verbindungen tragen üblicherweise weitere funktionelle Gruppen wie olefinische Gruppen oder Carbonylgruppen und dienen zur Einführung von funktionellen Gruppen in das Polyurethan, die die Dispergierung bzw. die Vernetzung oder weitere polymeranaloge Umsetzung des Polyurethans ermöglichen. In Betracht kommen hierfür Monomere wie Isopropenyl-α,α-dimethylbenzylisocyanat (TMI) und Ester von Acryl- oder Methacrylsäure wie Hydroxyethylacrylat oder Hydroxyethylmethacrylat.

Überzüge mit einem besonders guten Eigenschaftsprofil erhält man vor allem dann, wenn als Monomere (a1) im wesentlichen nur aliphatische Diisocyanate, wobei insbesondere der Anteil an HMDI mindestens 33 mol% beträgt, cycloaliphatische Diisocyanate oder TMXDI und als Monomer (b1.1) im wesentlichen nur ein Polyesterdiol, aufgebaut aus den genannten aliphatischen Diolen und Disäuren, eingesetzt werden.

Diese Monomerkombination wird in hervorragender Weise ergänzt als Komponente (c1) durch Diaminosulfonsäure-Alkali-Salze; ganz besonders durch die N-(2-Aminoethyl)-2-aminoethansulfonsäure bzw. ihre entsprechenden Alkalisalze, wobei das Na-Salz am besten geeignet ist, und eine Mischung von DETA/IPDA als Komponente (d1).

Auf dem Gebiet der Polyurethanchemie ist allgemein bekannt, wie das Molekulargewicht der Polyurethane durch Wahl der Anteile der miteinander reaktiven Monomere sowie dem arithmetischen Mittel der Zahl der reaktiven funktionellen Gruppen pro Molekül eingestellt werden kann.

Normalerweise werden die Komponenten (a1) bis (e1) sowie ihre jeweiligen Molmengen so gewählt, daß das Verhältnis A : B mit
A) der Molmenge an Isocyanatgruppen und
B) der Summe aus der Molmenge der Hydroxylgruppen und der Molmenge der funktionellen Gruppen, die mit Isocyanaten in einer Additionsreaktion reagieren können.
0,5 : 1 bis 2 : 1, bevorzugt 0,8 : 1 bis 1,5, besonders bevorzugt 0,9 : 1 bis 1,2 : 1 beträgt. Ganz besonders bevorzugt liegt das Verhältnis A : B möglichst nahe an 1 : 1.

Die eingesetzten Monomere (a1) bis (e1) tragen im Mittel üblicherweise 1,5 bis 2,5, bevorzugt 1,9 bis 2,1, besonders bevorzugt 2,0 Isocyanatgruppen bzw. funktionelle Gruppen, die mit Isocyanaten in einer Additionsreaktion reagieren können.

Die in der erfindungsgemäßen Dispersion enthaltenen Polyurethane enthalten bevorzugt keine wirksamen Mengen an Acylharnstoffgruppen, die sich durch Umsetzung der in den Polyurethanen enthaltenen Carbodiimidgruppen der Formel (I) mit Carbonsäuren, insbesondere solchen der Formel RCOOH, in der R für einen gesättigten oder ungesättigten Kohlenwasserstoffrest steht, erhalten lassen.

Zumindest beträgt das Verhältnis Acylgruppen zu Gruppen der Formel (I) weniger als 4 : 1 bevorzugt weniger als 1 : 1, besonders bevorzugt weniger als 0,2 : 1.

Die Polyaddition der Komponenten (a1) bis (e1) erfolgt im allgemeinen bei Reaktionstemperaturen von 20 bis 180°C, bevorzugt 50 bis 150°C unter Normaldruck oder unter autogenem Druck.

Die erforderlichen Reaktionszeiten können sich über wenige Minuten bis einige Stunden erstrecken. Es ist auf dem Gebiet der Polyurethanchemie bekannt, wie die Reaktionszeit durch eine Vielzahl von Parametern wie Temperatur, Konzentration der Monomere, Reaktivität der Monomeren beeinflußt wird.

Zur Beschleunigung der Reaktion der Isocyanate können die üblichen Katalysatoren, wie Dibutylzinndilaurat, Zinn-II-octoat oder Diazabicyclo-(2,2,2)-octan, mitverwendet werden.

Als Polymerisationsapparate kommen Rührkessel in Betracht, insbesondere dann, wenn durch Mitverwendung von Lösungsmitteln für eine niedrige Viskosität und eine gute Wärmeabfuhr gesorgt ist.

Bevorzugte Lösungsmittel sind mit Wasser unbegrenzt mischbar, weisen einen Siedepunkt bei Normaldruck von 40 bis 100°C auf und reagieren nicht oder nur langsam mit den Monomeren.
Gegebenenfalls können anteilig auch andere, mit Wasser unbegrenzt mischbare Lösungsmittel mit einen Siedepunkt bei Normaldruck >100°C verwendet werden. Beispiele hierfür sind N-Methylpyrrolidon, Dimethylformamid oder Dimethylacetamid.
Diese schwersiedenden Lösungsmittel können in der Dispersion verbleiben. Sie sollen jedoch nicht in Mengen größer als 10 Gew.%, bez. auf Dispersion, verwendet werden. Meistens werden die Dispersionen nach einem der folgenden Verfahren hergestellt:

Mach dem "Acetonverfahren" wird in einem mit Wasser mischbaren und bei Normaldruck unter 100°C siedenden Lösungsmittel aus den Komponenten (a1) bis (c1) ein ionisches Polyurethan hergestellt. Es wird soviel Wasser zugegeben, bis sich eine Dispersion bildet, in der Wasser die kohärente Phase darstellt.

Das "Präpolymer-Mischverfahren" unterscheidet sich vom Acetonverfahren darin, daß nicht ein ausreagiertes (potentiell) ionisches Polyurethan, sondern zunächst ein Präpolymer hergestellt wird, das Isocyanat-Gruppen trägt. Die Komponenten werden hierbei so gewählt, daß das definitionsgemäße Verhältnis A:B größer 1,0 bis 3, bevorzugt 1,05 bis 1,5 beträgt. Das Präpolymer wird zuerst in Wasser dispergiert und anschließend gegebenenfalls durch Reaktion der Isocyanat-Gruppen mit Aminen, die mehr als 2 gegenüber Isocyanaten reaktive Aminogruppen tragen, vernetzt oder mit Aminen, die 2 gegenüber Isocyanaten reaktive Aminogruppen tragen, kettenverlängert. Eine Kettenverlängerung findet auch dann statt, wenn kein Amin zugesetzt wird. In diesem Fall werden Isocyanat-gruppen zu Aminogruppen hydrolysiert, die mit noch verbliebenen Isocyanatgruppen der Präpolymere unter Kettenverlängerung abreagieren.

Üblicherweise wird, falls bei der Herstellung des Polyurethans ein Lösungsmittel mitverwendet wurde, der größte Teil des Lösungsmittels aus der Dispersion entfernt, beispielsweise durch

Destillation bei vermindertem Druck. Bevorzugt weisen die Dispersionen einen Lösungsmittelgehalt von weniger als 10 Gew.-% auf und sind besonders bevorzugt frei von Lösungsmitteln.

Die Dispersionen haben im allgemeinen einen Feststoffgehalt von 10 bis 75, bevorzugt von 20 bis 65 Gew.-% und eine Viskosität von 10 bis 500 m Pas (gemessen bei einer Temperatur von 20°C und einer Schergeschwindigkeit von 250 s⁻¹).

Hydrophobe Hilfsmittel, die unter Umständen nur schwierig homogen in der fertigen Dispersion zu verteilen sind wie beispielsweise Phenol-Kondensationsharze aus Aldehyden und Phenol bzw. Phenol-derivaten oder Epoxidharze und weitere z.B. in der DE-A-3903538, 43 09 079 und 40 24 567 genannten Polymere, die in Polyurethani dispersionen beispielsweise als Haftungsverbesserer dienen, können nach den in den beiden oben genannten Schriften beschriebenen Methoden dem Polyurethan oder dem Präpolymeren bereits vor der Dispergierung zugesetzt werden.

Zubereitungen, enthaltend die erfindungsgemäße Polyurethan-Dispersion (1), können handelsübliche Hilfs- und Zusatzstoffe wie weitere Polymere (b1) in dispergierter Form, Treibmittel, Entschäumer, Emulgatoren, Verdickungsmittel und Thixotropiermittel, Farbmittel wie Farbstoffe und Pigmente enthalten.

Bei den Polymeren (B), die die erfindungsgemäße Dispersion enthält, kann es sich beispielsweise um ein Polyurethan (2) handeln, welches üblicherweise aufgebaut ist aus
a2) Diisocyanaten, die keine Carbodiimid-Gruppen enthalten
b2) Diolen, von denen
   b2.1) 0 bis 100 mol-%, bezogen auf die Gesamtmenge der Diole (b2), ein Molekulargewicht von 500 bis 5000 aufweisen, und
   b2.2) 0 bis 90 mol-%, bezogen auf die Gesamtmenge der Diole (b2), ein Molekulargewicht von 60 bis 500 g/mol aufweisen,
c2) von den Monomeren (a2) und (b1) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird,
ed2) gegebenenfalls weiteren von den Monomeren (a2) bis (c2) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
e2) gegebenenfalls von den Monomeren (a2) bis (d2) verschiedenen einwertigen Verbindungen mit einer reaktiven Gruppe, bei der es sich um eine alkoholische Hydroxylgruppe, eine primäre oder sekundäre Aminogruppe oder eine Isocyanatgruppe handelt.

Als Monomere (a2), (b2), (c2), (d2), (e2) kommen die gleichen Monomere in Betracht, die als Monomere (a1.2), (b1), (c1), (d1), (e1) eingesetzt werden können. Abgesehen von der Tatsache, daß sie keine Carbodiimidgruppen enthalten, gilt für sie das gleiche wie für die Polyurethane (1), d.h. sie weisen ansonsten im allgemeinen die gleichen Eigenschaften auf und können grundsätzlich auf die gleiche Weise hergestellt werden wie die Polyurethane (1).

Als Polymere (B) kommen weiterhin durch radikalisch initiierte Polymerisation hergestellte Polymere (Polymer 3) in Betracht. Diese sind üblicherweise aufgebaut aus
a3) 30 bis 100 Gew.-Teilen wenigstens eines Monomeren aus der Gruppe umfassend C₁- bis C₂₀-Alkyl(meth)acrylate, Vinylestern, von bis zu 20 C-Atome aufweisenden Carbonsäuren, ethylenisch ungesättigten Nitrilen, Vinylaromaten mit bis zu 20 C-Atomen, Vinylhalogeniden und aliphatischen Kohlenwasserstoffen mit 2 bis 8 C-Atomen und 1 oder 2 Doppelbindungen (Monomere a3) und
b3) 0 bis 70 Gew.-Teilen sonstigen,wenigstens eine ethylenisch ungesättigte Gruppe aufweisenden Verbindungen I (Monomere b3)

(Meth)acryl- steht hierbei verkürzend für Methacryl- oder Acryl-.

Als Monomere (a3) zu nennen sind z.B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat und Vinylacetat.

Als vinylaromatische Verbindungen kommen Vinyltoluol, α- und p-Methylstyrol, α-Butylstyrol, 4-n-Butylstyrol, 4-n-Decylstyrol und vorzugsweise Styrol in Betracht.

Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid. Vinylhalogenide sind jedoch nicht bevorzugt.

Als nicht aromatische Kohlenwasserstoffe mit 2 bis 8 C-Atomen und ein oder zwei olefinischen Doppelbindungen seien Butadien, Isopren und Chloropren, sowie Ethylen, Propylen und Isobutylen genannt.

Die Hauptmonomeren werden auch vorzugsweise im Gemisch eingesetzt.

Vinylaromatische Verbindungen wie Styrol werden z.B. häufig im Gemisch mit C₁-C₂₀-Alkyl (meth)acrylaten, insbesondere mit C₁-C₈-Alkyl(meth)acrylaten, oder nicht aromatischen Kohlenwasserstoffen wie Isopren oder vorzugsweise Butadien eingesetzt.

Als Monomere (b3) kommen z.B. in Betracht: Ester der Acryl- und Methacrylsäure von Alkoholen mit 1 bis 20 C-Atomen, die außer dem Sauerstoffatom in der Alkoholgruppe mindestens ein weiteres Heteroatom enthalten und/oder die einen aliphatischen oder aromatischen Ring enthalten, wie 2-Ethoxyethylacrylat, 2-Butoxyethyl(meth)acrylat, Dimethylaminoethyl(meth)acrylat, Diethylaminoethyl(meth)acrylat, (Meth)acrylsäurearyl-, -alkaryl- oder Cycloalkylester, wie Cyclohexyl(meth)acrylat, Phenylethyl-(meth)acrylat, Phenylpropyl-(meth)acrylat oder Acrylsäureester von heterocyclischen Alkoholen wie Furfuryl(meth)acrylat.

Darüber hinaus kommen noch Monomere mit Amino- oder Amidgruppen wie (Meth)acrylamid, sowie deren am Stickstoff mit C₁-C₄-Alkyl substituierten Derivate in Betracht.

Von Bedeutung sind insbesondere hydroxyfunktionelle Monomere, z.B. (Meth)acrylsäure-C₁-C₁₅-alkylester, welche durch ein oder zwei Hydroxygruppen substituiert sind. Insbesondere von Bedeutung als hydroxyfunktionelle Comonomere sind (Meth)acrylsäure-C₂-C₈-hydroxyalkylester, wie n-Hydroxyethyl-, n-Hydroxypropyl- oder n-Hydroxybutyl(meth)acrylat.

Häufig empfiehlt sich die Mitverwendung von Monomeren mit Carbonsäure- oder Carbonsäureanhydridgruppen, z.B. Acrylsäure, Methacrylsäure, Itaconsäure, Maleinsäure- oder Fumarsäureanhydrid; diese Monomeren werden vorzugsweise in Mengen von 0 bis 10, besonders bevorzugt von 0,1 bis 3 Gew.-%, bezogen auf das Copolymerisat, eingesetzt.

Die Herstellung des Copolymerisats A) erfolgt durch radikalische Polymerisation. Geeignete Polymerisationsmethoden, wie Substanz-, Lösungs-, Suspensions- oder Emulsionspolymerisation sind dem Fachmann bekannt.

Vorzugsweise wird das Copolymerisat durch Lösungspolymerisation mit anschließender Dispergierung in Wasser oder besonders bevorzugt durch Emulsionspolymerisation hergestellt.

Die Comonomeren können bei der Emulsionspolymerisation wie üblich in Gegenwart eines wasserlöslichen Initiators und eines Emulgators bei vorzugsweise 30 bis 95°C polymerisiert werden.

Geeignete Initiatoren sind z.B. Natrium-, Kalium- und Ammoniumpersulfat, Peroxide wie z.B. tert.-Butylhydroperoxid, wasserlösliche Azoverbindungen oder auch Redoxinitiatoren.

Als Emulgatoren dienen z.B. Alkalisalze von längerkettigen Fettsäuren, Alkylsulfate, Alkylsulfonate, alkylierte Arylsulfonate oder alkylierte Biphenylethersulfonate. Des weiteren kommen als Emulgatoren Umsetzungsprodukte von Alkylenoxiden, insbesondere Ethylen- oder Propylenoxid mit Fettalkoholen oder- säuren oder Phenol bzw. Alkylphenolen in Betracht.

Im Falle von wäßrigen Sekundärdispersionen wird das Copolymerisat zunächst durch Lösungspolymerisation in einem organischen Lösungsmittel hergestellt und anschließend unter Zugabe von Salzbildnern, z.B. von Ammoniak, zu Carbonsäuregruppen enthaltenden Copolymerisaten in Wasser ohne Verwendung eines Emulgators oder Dispergierhilfsmittels dispergiert. Das organische Lösungsmittel kann abdestilliert werden. Die Herstellung von wäßrigen Sekundärdispersionen ist dem Fachmann bekannt und z.B. in der DE-A-37 20 860 beschrieben.

Zur Einstellung des Molekulargewichts können bei der Polymerisation Regler eingesetzt werden. Geeignet sind z.B. -SH-Gruppen enthaltende Verbindungen wie Mercaptoethanol, Mercaptopropanol, Thiophenol, Thioglycerin, Thioglykolsäureethylester, Thioglykolsäuremethylester und tert.-Dodecylmercaptan. Sie können z.B. in Mengen von 0 bis 0,5 Gew.-%, bezogen auf das Copolymerisat, eingesetzt werden.

Die Art und Menge der Comonomeren werden vorzugsweise so gewählt, daß das erhaltene Copolymerisat eine Glasübergangstemperatur zwischen -60 bis +140°C, vorzugsweise -60 bis +100°C aufweist. Die Glasübergangstemperatur des Copolymerisats wird durch Differentialthermoanalyse oder Differential Scanning Calorimetrie nach ASTM 3418/82 bestimmt.

Das zahlenmittlere Molekulargewicht Mₙ beträgt vorzugsweise 10³ bis 5·10⁶, besonders bevorzugt 10⁵ bis 2·10⁶ g/mol (bestimmt durch Gelpermeationschromatographie mit Polystyrol als Standard).

Wässerige Dispersionen, die für die Herstellung von beschichteten Textilien geeignet sind, die vorwiegend im Bautenschutz und insbesondere als Dachunterspannbahnen eingesetzt werden, weisen, bezogen auf den Feststoffgehalt der wässrigen Dispersion, bevorzugt folgende Zusammensetzung auf:
A) 10 bis 100 Gew.-% eines Polyurethans (1), welches hydrophile Gruppen trägt, die die Wasserdispergierbarkeit des Polyurethans ermöglichen
B) gegebenenfalls 5 bis 90 Gew.-% eines Polymeren (B)
C) gegebenenfalls 0,1 bis 10 Gew.-% eines Emulgators
D) gegebenenfalls 0,1 bis 10 Gew.-% eines Aminoplast- oder Phenolharzes
E) gegebenenfalls 1 bis 30 Gew.-% eines Flammschutzmittels und
F) gegebenenfalls 1 bis 70 Gew.-% eines Füllstoffes.
G) gegebenenfalls 1 bis 30 Gew.-% eines Oleophobierungsmittels.

Die Komponenten (B) bis (G) sind handelsüblich. Welche Materialien jeweils besonders geeignet sind, ist beispielsweise in der DE-A-19609311 näher erläutert. In dieser Schrift ist auch ein Verfahren für die Herstellung von beschichteten Textilien, die sich insbesondere für den Bautenschutz eignen und unter Verwendung von anderen wässerigen Dispersionen hergestellt werden, beschrieben, das auch auf die erfindungsgemäße Zubereitung, enthaltend Komponente (A) und gegebenenfalls weitere der Komponenten (B) bis (G), anwendbar ist.

Die erfindungsgemäße wässerige Dispersion enthält als Emulgatoren beispielsweise höhere Alkylsulfate, Alkylbenzolsulfonate, Dialkylsulfosuccinate, Polyoxyethylenalkylphenylether oder Fettsäuren in Form ihrer Alkali- oder Ammoniumsalze. Bevorzugt wird als Emulgator eine Mischung aus Alkali-n-octadecylsulfonat und Alkali-(C₉- bis C₁₄-Alkyl)-sulfosuccinat eingesetzt, wobei das Mischungsverhältnis 0,5:1 bis 1:1 beträgt.

Geeignete Aminoplast- oder Phenolharze (Komponente D) sind die allgemein bekannten handelsüblichen Produkte (vgl. Ullmanns Encyklopädie der technischen Chemie, Band 7, 4. Auflage, 1974, Seiten 403 bis 422 und Ullmann's encyclopedia of industrial chemistry, Band A19, 5. Auflage, 1991, Seiten 371 bis 384.

Bevorzugt sind die Melamin-Formaldehyd-Harze, wobei bis 20 mol-% des Melamins durch äquivalente Mengen Harnstoff ersetzt sein können. Bevorzugt ist methyloliertes Melamin, z.B. Bi-, Tri-, und/oder Tetramethylolmelamin.

Die Melamin-Formaldehyd-Harze werden üblicherweise in Pulverform oder in Form ihrer konzentrierten wässerigen Lösungen eingesetzt, deren Feststoffgehalte 40 bis 70 Gew.-% betragen.

Geeignete Flammschutzmittel (Komponente E) sind beispielsweise Antimontrioxid Sb₂O₃, Antimonpentoxid Sb₂O₃, Aluminiumoxidhydrat Al₂O₃ · 3H₂O, Zinkborat Zn(BO₂)₂ · 2H₂O bzw. 2ZnO · (B₂O₃)₃ · (H₂O)_{3,5}, Ammonium-ortho- bzw. -polyphosphat NH₄H₂PO₄ bzw. (NH₄PO₃)ₙ. Melamin, Melamincyanurat sowie Chlorparaffine.

Das Melamin liegt in der wässerigen Dispersion in suspendierter Form vor. Der mittlere Teilchendurchmesser beträgt bevorzugt 5 bis 100 µm, besonders bevorzugt 10 bis 50 µm. Es wird zweckmäßigerweise in Form eines Pulvers der genannten Teilchengröße eingesetzt.

Besonders bevorzugt sind die Phosphonsäure-Ester, insbesondere 5-Ethyl-2-methyl-1,3,2-dioxaphosphorinan-5-yl)methylphosphonat-P-oxid und Bis(5-ethyl-2-methyl-1,3,2-dioxaphosphorinan-5-yl)methylmethylphosphonat-P,P'-dioxid.

Bei den Füllstoffen (Komponente F), die die wässerigen Dispersionen enthalten, sind übliche im Handel erhältliche Typen geeignet.

Der mittlere Teilchendurchmesser liegt bevorzugt bei 0,1 bis 10 µm Geeignete Füllstoffe (Komponente F) sind beispielsweise CaCO₃, BaSO₄, TiO₂, ZnO und Talk.

Besonders bevorzugt sind Kaoline.

Geeignete Oleophobierungsmittel (Komponente G) sind beispielsweise Fluorkohlenwasserstoffe, gegebenenfalls in wässriger Emulsion.

Die erfindungsgemäßen wässerigen Dispersionen werden zweckmäßigerweise gegebenenfalls unter Zuhilfenahme von Verdickungsmitteln auf eine Viskosität von 500 bis 3000 mPa·s (gemessen bei Raumtemperatur) eingestellt. Als Verdickungsmittel eignen sich übliche Verdickungsmittel wie Polyacrylsäuren, Polyvinylpyrrolidone oder Cellulosederivate wie Methylcellulose.

Der pH-Wert der erfindungsgemäßen wässerigen Dispersionen beträgt üblicherweise 3 bis 10, bevorzugt 8 bis 10 und ihr Feststoffgehalt im allgemeinen 20 bis 70, bevorzugt 30 bis 60.

Die erfindungsgemäße wässerige Dispersion eignet sich als Beschichtungsmittel zur Beschichtung von gewebten, gewirkten oder vliesartigen textilen Trägermaterialien zu deren wasserdichten, dampfdurchlässigen und flammhemmenden Ausrüstung. Vorzugsweise werden Trägermaterialien aus synthetischen Fasern verwendet. Beispiele hierfür sind Polyethylen-, Polypropylen-, Polyester-, Polyamid-, Polyacrylnitril- und Glasfasern. Besonders bevorzugt werden Rohvliese, insbesondere Spinnvliese, aus den genannten synthetischen Fasern mit einem Flächengewicht von 50 bis 300 g/m².

Zur Herstellung der beschichteten Textilien werden die erfindungsgemäßen wässerigen Dispersionen nach üblichen Verfahren direkt oder indirekt (Transferbeschichtung) auf die textilen Trägermaterialien aufgetragen, z.B. durch Rakeln oder Streichen, und das beschichtete Trägermaterial anschließend getrocknet.

### Bevorzugt wird dabei auf folgende Weise vorgegangen:

Das Beschichtungsmittel wird in Schaumform auf das Trägermaterial aufgetragen, da dadurch die Dampfdurchlässigkeit erheblich verbessert wird. Hierzu wird das Beschichtungsmittel nach Zusatz des Schaumstabilisators und gegebenenfalls von Verdickungsmittel und weiterer Zusatzstoffe mechanisch aufgeschäumt. Dies kann in einem Schaummixgerät unter Eintrag hoher Scherkräfte erfolgen. Eine weitere Möglichkeit besteht darin, in einem Schaumgenerator durch Einblasen von Druckluft aufzuschäumen. Vorzugsweise wird mittels eines Schaumgenerators aufgeschäumt.

Das geschäumte Beschichtungsmittel wird dann mit üblichen Beschichtungseinrichtungen, beispielsweise einem Streichrakel oder anderen Schaumauftragungsgeräten, auf das Trägermaterial aufgetragen. Der Auftrag kann ein- oder beidseitig erfolgen; vorzugsweise erfolgt sie beidseitig. Die Auftragsmenge pro Seite beträgt von 20 bis 150 g/m², insbesondere 50 bis 90 g/m². Bei Mengen unterhalb 20 g/m² erhält man zwar guten Dampfdurchlaß bei niedrigen Kosten, aber ungenügenden Flammschutz und schlechte Wasserdichtigkeit. Bei Mengen oberhalb 150 g/m² treten beim Trocknen Rißbildungen auf.

Nach dem Auftrag wird der Schaum bei geringer Luftströmung im Trockenkanal, beispielsweise durch Infraroterhitzung, mit einem Temperaturgradienten von 60 bis 180°C, vorzugsweise 60 bis 130°C getrocknet.

Zur Verbesserung der flammhemmenden Wirkung wird in einer bevorzugten Ausführungsform der Schaum beidseitig in einer Schichtdicke von 0,3 bis 1,0 mm aufgetragen. Besonders bevorzugt wird der Schaum in unterschiedlicher Schichtdicke auf die beiden Seiten des Trägermaterials aufgetragen. Bei der letztgenannten Ausführungsform wird der Schaum auf der Unterseite des Trägermaterials in einer dünnen Schicht von maximal 0,4 mm Schichtdicke, vorzugsweise mit einem Spaltrakel, so aufgetragen, daß er möglichst tief in die Hohlräume des Vlieses zwischen die Fasern eindringt. Auf der Oberseite wird der Schaum zur Verbesserung der Wasserdichtigkeit, vorzugsweise mit einem Spaltrakel, insbesondere in einer Schicht von 0,3 bis 1,0 mm Schichtdicke, aufgetragen.

In einer besonders bevorzugten Ausführungsform kann zur Verbesserung der Abriebfestigkeit, der flammhemmenden Wirkung und der Wasserdichtigkeit die Schaumschicht nach der Trocknung komprimiert und dabei teilweise in das Vlies eingepreßt werden. Die Komprimierung kann beispielsweise durch Kalandrierung in einem Temperaturbereich von 20 bis 180°C und bei einem Liniendruck von 50 bis 3000 N/cm erfolgen, wobei es vorteilhaft ist, die Heißkalandrierung zwischen 2 glatten Rollen, einer aus Stahl und einer aus einem weicheren Material, beispielsweise Polyamid oder Gummi, durchzuführen. Insbesondere wird nur die Schaumschicht auf der Oberseite des textilen Trägermaterials komprimiert. Gegebenenfalls kann zur Verbesserung der Wasserdichtigkeit und der Abriebfestigkeit eine weitere Beschichtung, vorzugsweise in einer Menge von 5 bis 30 g/m², mit unverschäumter Dispersion erfolgen.

Weiterhin ist es möglich, die Wasserdichtigkeit der beschichteten Textilien zu verbessern, indem man einen Fluorkohlenwasserstoff, z.B. als wässerige Emulsion, aufträgt und anschließend trocknet.

Mit der erfindungsgemäßen Verfahrensweise erhält man bei der bevorzugten Schaumbeschichtung, beispielsweise von Polyester-Vliesstoffen (PET), Materialien mit sehr hoher Wasserdichtigkeit (DIN 53886: >300 mm Wassersäule), mit sehr hoher Wasserdampfdurchlässigkeit (DIN 53122/1: >350 g/m²/d) und einer ausgezeichneten Flammverzögerung, die der Klassifizierung nach DIN 4102 B2 entspricht.

Die mit der Zubereitung, enthaltend die Komponenten (A) bis (G), beschichteten textilen Trägermaterialien eignen sich zur Verwendung im Bautenschutz als Dachbahnen oder Abdichtbahnen, beispielsweise unter Dachziegel oder Fassadenwänden aus Holz. Sie eignen sich auch zur Verwendung als Schutzplanen für Geräte und Materialien und für den Einsatz im Geotextilbereich.

Gegenstände aus Metall, Kunststoff, Papier, Leder oder Holz lassen sich ebenfalls mit anderen Gegenständen, vorzugsweise den vorgenannten Gegenständen, verkleben, indem man die erfindungsgemäße wässerige Dispersion in Form eines Films auf einem dieser Gegenstände aufträgt und ihn vor oder nach dem Trocknen des Films mit einem anderen Gegenstand zusammenfügt.

Gegenstände aus Textil, Leder oder Papier lassen sich mit den erfindungsgemäßen Dispersionen imprägnieren, indem man diese Gegenstände mit der wässerigen Dispersion tränkt und anschließend trocknet.

Allgemein werden zur Herstellung der beschichteten Textilien oder Vliese sowie der verklebten Gegenstände die Zubereitungen, enthaltend die erfindungsgemäße wässerige Dispersion (1) nach üblichen Verfahren aufgetragen, z.B. durch Rakeln oder Streichen und das beschichtete Trägermaterial anschließend getrocknet. Die Verfahren und die sonstigen Komponenten der Zubereitungen, die in der Zubereitung ihre allgemein bekannte Funktion aufweisen, richten sich dabei nach dem jeweiligen Anwendungsgebiet.

### Experimenteller Teil

### Abkürzungen

- DETA =: Diethylentriamin
- HMDI =: Bis-(4-isocyanatocyclohexyl)methan
- IPDA =: Isophorondiamin
- DBTL =: Dibutylzinndilaurat
- TMXDI =: Tetramethylxylylendiisocyanat
- IPDI =: 1-Isocyanato-3,5,5-trimethyl-5-isocyanatomethylcyclohexan
- CDI =: Carbodiimid
- PUD =: Polyurethandispersionen

### A. Ausgangsprodukte

### Beispiel 1 (CDI-haltige PUD)

### Dispersion D 1

400 g (0,200 mol) eines Polyesterols aus Adipinsäure, Neopentylglykol und Hexandiol der OH-Zahl 56 und 2,5 g (0,003 mol) eines Carbodiimids aus TMXDI mit einem NCO-Gehalt von 10,0 Gew-% und einem CDI-Gehalt von 14,2 Gew.% wurden in einem Rührkessel bei 50°C vorgelegt. Hierzu wurden 35,4 g (0,1594 mol) IPDI, 42,9 g (0,1624 mol) HMDI und 80 g Aceton gegeben. Nach 60 min. Rühren bei 90°C wurden 0,15 g DBTL zugefügt und weitere 120 min gerührt. Dann wurde mit 500 g Aceton verdünnt und gleichzeitig auf 50°C gekühlt. Der NCO-Gehalt der Lösung betrug 0,97% (ber. 0,94%). Nach Zugabe von 22,5 g (0,0534 mol) einer 50%igen wäßrigen Lösung des Na-Salzes der Aminoethylaminoethansulfonsäure wurde durch Zugabe von 800 g Wasser innerhalb von 5 min. dispergiert. Nach dem Ende der Dispergierung wurde eine Lösung von 3,9 g (0,0379 mol) DETA und 1,8 g (0,0106 mol) IPDA in 50 g Wasser zugegeben. Nach Destillation des Acetons resultierte eine feinteilige wäßrige PUR-Dispersion mit ca. 40% Festgehalt.

Gehalt an Carbodiimid: 17,2 mmol/kg

### Beispiel 2 (CDI-haltige PUD)

### Dispersion D 2

400 g (0.200 mol) eines Polyesterols aus Adipinsäure, Neopentylglykol und Hexandiol der OH-Zahl 56 und 5,0 g (0,006 mol) eines Carbodiimids aus TMXDI mit einem NCO-Gehalt von 10,0 Gew-% und einem CDI-Gehalt von 14,2 Gew.% wurden in einem Rührkessel bei 50°C vorgelegt. Hierzu wurden 34,8 g (0,1565 mol) IPDI, 42,9 g (0,1624 mol) HMDI und 80 g Aceton gegeben. Nach 60 min Rühren bei 90°C wurden 0,15 g DBTL zugefügt und weitere 120 min gerührt. Dann wurde mit 500 g Aceton verdünnt und gleichzeitig auf 50°C gekühlt. Der NCO-Gehalt der Lösung betrug 0,99% (ber. 0,94%). Nach Zugabe von 22,5 g (0,0534 mol) einer 50%igen wäßrigen Lösung des Na-Salzes der Aminoethylaminoethansulfonsäure wurde durch Zugabe von 800 g Wasser innerhalb von 5 min dispergiert. Nach dem Ende der Dispergierung wurde eine Lösung von 3,9 g (0,0379 mol) DETA und 1,8 g (0,0106 mol) IPDA in 50 g Wasser zugegeben. Nach Destillation des Acetons resultierte eine feinteilige wäßrige PUR-Dispersion mit ca. 40% Festgehalt.

Gehalt an Carbodiimid: 35,5 mmol/kg

### Beispiel 3 (CDI-haltige PUD)

### Dispersion D 2a

400 g (0,200 mol) eines Polyesters aus Adipinsäure, Neopentylglykol und Hexandiol (OH/=56), 0,2 g DBTL, 40,2 g (0,3 mol) DMPA und 45,0 g (0,50 mol) Butandiol-1,4 wurden in 50 g Aceton mit 255,7 g (1,15 mol) IPDI 2,5 h bei 100°C umgesetzt. Der NCO-Gehalt der Lösung lag bei 1,58 % (ber.: 1,59 %). Dann wurden 50,0 g eines NCO-terminierten Carbodiimids aus TMXDI mit 8 % NCO und 15 % CDI in 20 g Aceton zugesetzt. Nach 10 min wurde mit 650 g Aceton verdünnt und auf 30°C abgekühlt. Dann wurden 30,0 g (0,30 mol) TEA zudosiert und nach 5 min mit 800 g VE-Wasser innerhalb von 5 min dispergiert. Sofort danach wurden 34,0 g IPDA, gelöst in 200 g Wasser, zugegeben. Dann wurde im Vakuum bei Temperaturen bis 43°C abdestilliert und der Feststoffgehalt auf 40 % eingestellt.

### Vergleichsbeispiel 1 (ohne Carbodiimid)

### Dispersion D 3

400 g (0,200 mol) eines Polyesterols aus Adipinsäure, Neopentylglykol und Hexandiol der OH-Zahl 56 wurden in einem Rührkessel bei 50°C vorgelegt. Hierzu wurden 36,1 g (0,1624 mol) IPDI, 42,9 g (0,1624 mol) HMDI und 80 g Aceton gegeben. Nach 60 min Rühren bei 90°C wurden 0,15 g DBTL zugefügt und weitere 120 min gerührt. Dann wurde mit 500 g Aceton verdünnt und gleichzeitig auf 50°C gekühlt. Der NCO-Gehalt der Lösung betrug 0,99% (ber. 0,94%). Nach Zugabe von 22,5 g (0,0534 mol) einer 50%igen wäßrigen Lösung des Na-Salzes der Aminoethylaminoethansulfonsäure wurde durch Zugabe von 800 g Wasser innerhalb von 5 min dispergiert. Nach dem Ende der Dispergierung wurde eine Lösung von 3,9 g (0,0379 mol) DETA und 1,8 g (0,0106 mol) IPDA in 50 g Wasser zugegeben. Nach Destillation des Acetons resultierte eine feinteilige wäßrige PUR-Dispersion mit ca. 40% Festgehalt.

### Vergleichsbeispiel 2 (Carbodiimid der Dispersion zugesetzt) Dispersion D 4

Zu 500 g der Dispersion aus Vergleichsbeispiel 1 wurden 5,6 g eines nach dem Beispiel 3 der EP 628 541 hergestellten wasserlöslichen Carbodiimids mit einem Gehalt an Carbodiimid von 1250 mmol/kg zugesetzt.

Gehalt an Carbodiimid: 35,0 mmol/kg

### Vergleichsbeispiel 3 (ohne CDI)

### Dispersion D 4a

Es wurde verfahren wie im Beispiel 3, jedoch wurde kein Carbodiimid zugesetzt.

### Prüfung

Zur Prüfung der Dispersionen D1, D2, D3 und D4 wurden aus den Dispersionen Filme mit ca. 1 mm Dicke gegossen und 3 Tage bei 23°C trocknen gelassen. Unmittelbar nach ihrer Herstellung sowie nach einer 7 tägigen Lagerung bei 70°C und 90% relativer Feuchte wurde ihre Zugfestigkeit nach DIN 53 504 gemessen.

Die Prüfergebnisse sind der Tabelle 1a zu entnehmen.

**Tabelle 1a**

| Beispiel | Zugfestigkeit [N/mm²] | | Änderung |
|---|---|---|---|
| | sofort | 7d, 70°C, 90% rel. Feuchte | [%] |
| D 1 | 12 | 17 | +42 |
| D 2 | 12 | 17 | +42 |

| Vergleichsbeispiele | | | |
|---|---|---|---|
| D 3 | 10 | 9 | -10 |
| D 4 | 8,3 | 7,0 | -16 |

Überraschend ist, daß die Zugfestigkeit durch die Feucht-Warm-Lagerung nicht nur nicht ab-, sondern sogar noch zunimmt.

Zur Prüfung der Dispersionen D 2a und D 4a wurden Filme mit einer Trockendicke von ca. 1 mm ausgegossen, bei 80°C für 4 h getrocknet und einem Zugversuch unterworfen.

Außerdem wurde die Wasseraufnahme durch Einlegen eines Filmstücks für 24 h in Wasser bei RT bestimmt. Die Prüfungsergebnisse sind der Tabelle 1b zu entnehmen.

**Tabelle 1b**

| Dispersion | Reißspannung [MPa] | Wasseraufnahme [%] |
|---|---|---|
| D 2a | 36 | 91 |
| D 4a | 24 | 5 |
| Anwendungsbeispiele | | |
| PUR-Abmisch-Dispersion (CDI-frei) | | |

### Dispersion D 5

400 g (0,200 mol) eines Polyesterols aus Adipinsäure, Neopentylglykol und Hexandiol der OH-Zahl 56 wurden in einem Rührkessel bei 50°C vorgelegt. Hierzu wurden 110,0 g (0,4948 mol) IPDI, 129,9 g (0,4917 mol) HMDI und 100 g Aceton gegeben. Nach 60 min Rühren bei 90°C wurden 0,15 g DBTL und 54,0 g (0,600 mol) Butandiol-1,4 zugefügt und weitere 120 min gerührt. Dann wurde mit 640 g Aceton verdünnt und gleichzeitig auf 50°C gekühlt. Der NCO-Gehalt der Lösung betrug 0,97% (ber. 1,02%). Nach Zugabe von 25,3 g (0,060 mol) einer 50%igen wäßrigen Lösung des Na-Salzes der Aminoethylaminoethansulfonsäure wurde durch Zugabe von 850 g Wasser innerhaib von 5 min dispergiert. Nach dem Ende der Dispergierung wurde eine Lösung von 6,5 g (0,0631 mol) DETA und 2,4 g (0,0141 mol) IPDA in 50 g Wasser zugegeben. Nach Destillation des Acetons resultierte eine feinteilige wäßrige PUR-Dispersion mit ca. 40% Festgehalt.

### B. Herstellung des Beschichtungsmittels

### Beispiel B 1

46 g Dispersion D 1 wurden vorgelegt und unter Rühren 12 g Dispersion D 5 zugegeben. Anschließend wurden 14,2 g Wasser und 0,85 g Ammoniak (25 %ig) zugegeben. Unter weiterem Rühren wurden dann 2,5 g Ammonstearat 35 %ig (Fa. Bärlocher) sowie 0,4 g eines Dinatrium-n-Octadecylsulfosuccinamats (Aerosol® 18, Fa. Cytec) und 0,2 g eines Natriumalkylsulfats (Empimin® LR 28, Fa. Albright & Wilson) zugesetzt. Weiter werden 0,75 g Braunpigment (Helizarin® Braun TT conc., Fa. BASF), 10 g Melamin (<40 µm, Fa. BASF) und 13 g Kaolin (China Clay SPS, Fa. Bassermann) zugegeben. Danach werden noch 1,1 g Melaminharz (Saduren® 163, Fa. BASF) und 3,2 g eines Flammschutzmittels (Amgart CT® , Fa. Albright & Wilson) zugesetzt. Dieser Ansatz wird dann mit 0,8 g eines Polyacrylsäure-Verdickers (Latekoll® D, Fa. BASF) auf eine Viskosität von 1800-2000 mPas (Haake VT 02, Spindel 1) verdickt.

### Beispiel B 2

46 g Dispersion D 1 wurden vorgelegt und unter Rühren 12 g Dispersion D 5 zugegeben. Anschließend wurden 14,2 g Wasser und 0,85 g Ammoniak (25 %ig) zugegeben. Unter weiterem Rühren wurden dann 2,5 g Ammonstearat 35 %ig (Fa. Bärlocher) sowie 0,4 g eines Dinatrium-n-Octadecylsulfosuccinamats (Aerosol® 18, Fa. Cytec) und 0,2 g eines Natriumalkylsulfats (Empimin® LR 28, Fa. Albright & Wilson) zugesetzt. Weiter werden 0,75 g Braunpigment (Helizarin® Braun TT conc., Fa. BASF), 5 g Melamincyanurat (Budit 315 ca.2 µm, Fa. Chem. Fabrik, Budenheim) und 13 g Kaolin (China Clay SPS, Fa. Bassermann) zugegeben. Danach werden noch 1,1 g Melaminharz (Saduren® 163, Fa. BASF) und 3,2 g eines Flammschutzmittels (Amgart CT® , Fa. Albright & Wilson) zugesetzt. Dieser Ansatz wird dann mit 0,8 g eines Polyacrylsäure-Verdickers (Latekoll® D, Fa. BASF) auf eine Viskosität von 1800-2000 mPas (Haake VT 02, Spindel 1) verdickt.

### Beispiel B 3

28,5 g Dispersion D 1 wurden vorgelegt und unter Rühren 28,5 g Dispersion D 5 zugegeben. Anschließend wurden 13,8 g Wasser und 0,85 g Ammoniak (25 %ig) zugegeben. Unter weiterem Rühren wurden dann 3,2 g Ammonstearat 35 %ig (Fa. Bärlocher) sowie 0,5 g eines Dinatrium-n-Octadecylsulfosuccinamats (Aerosol® 18, Fa. Cytec) und 0,3 g eines Natriumalkylsulfats (Empimin® LR 28, Fa. Albright & Wilson) zugesetzt. Weiter werden 0,63 g Braunpigment (Helizarin® Braun TT conc., Fa. BASF) und 5,3 g Melamincyanurat (Budit 314, ca. 8µm, Fa. Chem. Fabrik, Budenheim) und 12,7 g Kaolin (China Clay SPS, Fa. Bassermann) zugegeben. Danach werden noch 1,1 g Melaminharz (Saduren® 163, Fa. BASF) und 3,2 g eines Flammschutzmittels (Amgart CT® , Fa. Albright & Wilson) zugesetzt. Dieser Ansatz wird dann mit 1,4 g eines Polyacrylsäure-Verdickers (Latekoll® D, Fa. BASF) auf eine Viskosität von 2400 m·Pas (Haake VT 02, Spindel 1) verdickt.

### Beispiel B 4

28,5 g Dispersion D 1 wurden vorgelegt und unter Rühren 28,5 g Dispersion D 5 zugegeben. Anschließend wurden 13,8 g Wasser und 0,85 g Ammoniak (25 %ig) zugegeben. Unter weiterem Rühren wurden dann 3,2 g Ammonstearat 35 %ig (Fa. Bärlocher) sowie 0,5 g eines Dinatrium-n-Octadecylsulfosuccinamats (Aerosol® 18, Fa. Cytec) und 0,3 g eines Natriumalkylsulfats (Empimin® LR 28, Fa. Albright & Wilson) zugesetzt. Weiter werden 0,63 g Braunpigment (Helizarin® Braun TT conc., Fa. BASF) und 5,3 g Melamincyanurat (Budit 315, ca. 2µm, Fa. Chem. Fabrik, Budenheim) und 12,7 g Kaolin (China Clay SPS, Fa. Bassermann) zugegeben. Danach werden noch 1,1 g Melaminharz (Saduren® 163, Fa. BASF) und 3,2 g eines Flammschutzmittels (Amgart CT® , Fa. Albright & Wilson) zugesetzt. Dieser Ansatz wird dann mit 1,3 g eines Polyacrylsäure-Verdickers (Latekoll® D, Fa. BASF) auf eine Viskosität von 2300 mPas (Haake VT 02, Spindel 1) verdickt.

### Beispiel B 5

40 g Dispersion 1 wurden vorgelegt und unter Rühren 20 g Acronal® S 560 , 40 g Vinofan® V 800 sowie 200 g Wasser zugegeben. Unter weiterem Rühren wurden dann 22,5 g Gelbsiegelkreide (Fa. Norwegen Talk) zugesetzt. Weiter werden 6 g Braunpigment (Helizarin® Braun TT conc., Fa. BASF) zugegeben. Danach werden noch 2,5 g Melaminharz (Saduren® 163, Fa. BASF) zugesetzt. Dieser Ansatz wird dann mit 0,1 g eines Acrylsäure/Acrylamid- Verdickers (Streocoll® BL, Fa. BASF) und 12,5 g eines Polyacrylsäure-Verdickers (Lutexal® TX 4623X, Fa. BASF) auf eine Viskosität von 9500 m·Pas (Haake VT 02, Spindel 1) verdickt.

### Beispiel B 6

60 g Dispersion 1 wurden vorgelegt und unter Rühren 40 g Vinofan V 800 sowie 180 g Wasser zugegeben. Unter weiterem Rühren wurden dann 22,5 g Gelbsiegelkreide (Fa. Norwegen Talk) zugegeben. Weiter werden 6 g Braunpigment (Helizarin® Braun TT conc., Fa. BASF) zugesetzt. Danach werden noch 2,5 g Melaminharz (Saduren® 163, Fa. BASF) zugegeben. Dieser Ansatz wird dann mit 0,1 g eines Acrylsäure/Acrylamid- Verdickers (Streocoll® BL, Fa. BASF) und 12,5 g eines Polyacrylsäure-Verdickers (Lutexal® TX 4623X, Fa. BASF) auf eine Viskosität von 8500 m·Pas (Haake VT 02, Spindel 1) verdickt.

### C. Herstellung der Vliesbeschichtung

### Beispiele V1-V4

Die Beschichtungsmittel gemäß den Beispielen B1-B4 wurden mit einem Storkmixer mechanisch aufgeschäumt (Schaumdichte 250 g/l) und auf ein ca. 130 g/m² schweres Polyester Spinnvlies mittels eines Spaltrakels (Fa. Monforts) einseitig auf die Vliesoberfläche (Schaumhöhe: 1 mm) aufgetragen. Anschließend wurde das beschichtete Vlies in einem Umlufttrockenschrank bei 100°C vorgetrocknet. Die Schaumschicht wurde mit einem Liniendruck von 80 KN/60 cm bei ca. 20°C kalandriert und anschließend mit 40 g/l Persistol O (Fluorcarbon) oleophobiert. Die Vernetzung erfolgte bei 2 min. bei 160°C.

### Beispiele V5-V6

Die Beschichtungsmittel gemäß den Beispielen B5-B6 wurden mit einem Spaltrakel (0,15 mm) auf ein Transferpapier 'Supermatt' (Fa. Warren & Co, Belgien) aufgerakelt und ca. 3 min. bei 100°C im Umlufttrockenschrank vorgetrocknet. Anschließend wird dieser Beschichtungsstrich (Deckstrich) mit dem Beschichtungsmittel gemäß Beispiel 5-6 mit einem Spaltrakel (0,2 mm) aufgerakelt (Kaschierstrich) und das Trägervlies (PET, ca. 115 g/m²) mit definiertem Druck zukaschiert und 4 min. bei 100°C im Umluftrockenschrank vorgetrocknet. Das beschichtete Muster wurde anschließend vom Papier getrennt, oleophobiert und 2 min. bei 170°C im Umlufttrockenschrank vernetzt.

### D. Anwendungstechnische Prüfung:

Die gemäß den Beispielen V1-V6 hergestellten beschichteten Vliese wurden auf Wasserdichtigkeit, Wasserdampfdurchlässigkeit und Flammhemmung hin geprüft. Die Prüfergebnisse sind in Tabelle 2 wiedergegeben.

Zum Vergleich wurden unter gleichen Bedingungen eine Dachunterspannbahn hergestellt nach Beispiel 1 aus der DE-A-19609311 (Vergleichsbeispiel 3) geprüft.

**Tabelle 2**

| | Auftragsmenge [g/m²] | Schaumdichte [g/l] | Wasserdichtigkeit [mm H₂O] | Wasserdichtigkeit [ml/4h] | Wasserdampfdurchlässigkeit [g/m2*d] | Entflammbarkeit |
|---|---|---|---|---|---|---|
| Beispiel V1 | 95 | ca. 250 | >950 | 0 | >900 | bestanden |
| Beispiel V2 | 95 | ca. 250 | >950 | 0 | >900 | bestanden |
| Beispiel V3 | 90 | ca. 250 | >950 | 0 | >900 | bestanden |
| Beispiel V4 | 90 | ca. 250 | >950 | 0 | >900 | bestanden |
| Beispiel V5 | 60 | - | >950 | 0 | >900 | - |
| Beispiel V6 | 60 | - | >950 | 0 | >900 | - |
| Vergleichsbeispiel 3 | 100 | ca. 250 | 1000 | 0 | >900 | bestanden |
| ¹⁾ Die Auftragsmenge bezieht sich auf den Feststoffgehalt des Beschichtungsmittels | | | | | | |
| ²⁾ Die Prüfung der Wasserdichtigkeit erfolgte nach DIN 53 886/ISO 811 | | | | | | |
| ³⁾ Die Prüfung der Wasserdichtigkeit erfolgte nach der österreichischen Norm (Ö Norm) 13 3690 in Gegenwart eines Netzmittels | | | | | | |
| ⁴⁾ Die Prüfung der Wasserdampfdurchlässigkeit erfolgte nach DIN 52 615 | | | | | | |
| ⁵⁾ Die Prüfung auf Entflammbarkeit erfolgte nach DIN 4102 B2 Teil 1 | | | | | | |

## Patentansprüche

1. Wässerige Dispersionen enthaltend ein Polyurethan (1), aufgebaut aus
a1) Diisocyanaten, die
a1.1) Struktureinheiten der Formel (I)
-N=C=N- (I)
enthalten und gegebenenfalls solche,
a1.2) die frei sind von Struktureinheiten der Formel (I),
b1) Diolen, von denen
b1.1) 10 bis 100 mol-%, bezogen auf die Gesamtmenge der Diole (b1), ein Molekulargewicht von 500 bis 5000 aufweisen, und
b1.2) 0 bis 90 mol-%, bezogen auf die Gesamtmenge der Diole (b1), ein Molekulargewicht von 62 bis 500 g/mol aufweisen,
c1) von den Monomeren (a1) und (b1) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird,
d1) gegebenenfalls weiteren von den Monomeren (a1) bis (c1) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
e1) gegebenenfalls von den Monomeren (a1) bis (d1) verschiedenen einwertigen Verbindungen mit einer reaktiven Gruppe, bei der es sich um eine alkoholische Hydroxylgruppe, eine primäre oder sekundäre Aminogruppe oder eine Isocyanatgruppe handelt.

2. Wässerige Dispersionen nach Anspruch 1, wobei der Gehalt an Carbodiimid-Struktureinheiten, bezogen auf das Polyurethan, 5 bis 200 mmol/kg beträgt.

3. Wässerige Dispersionen nach Anspruch 1 oder 2, wobei es sich bei den Polyisocyanaten (a1.1) um Tetramethylxylylendiisocyanat (TMXDI) handelt.

4. Wässerige Dispersionen nach den Ansprüchen 1 bis 3, wobei es sich bei den Diolen (b1.1) um Polyesterole handelt.

5. Wässerige Dispersionen, die für die Herstellung von beschichteten Textilien geeignet sind, enthaltend, bezogen auf den Feststoffgehalt
A) 10 bis 100 Gew.-% eines Polyurethans (1), welches hydrophile Gruppen trägt, die die Wasserdispergierbarkeit des Polyurethans ermöglichen
B) gegebenenfalls 5 bis 90 Gew.-% eines Polymeren (B), bei dem es sich um
B1) ein von dem Polyurethan (1) verschiedenes Polyurethan (2), welches aufgebaut ist
a2) Diisocyanaten, die keine Carbodiimidgruppen enthalten
b2) Diolen, von denen
b2.1) 10 bis 100 mol-%, bezogen auf die Gesamtmenge der Diole (b1), ein Molekulargewicht von 500 bis 5000 aufweisen, und
b2.2) 0 bis 90 mol-%, bezogen auf die Gesamtmenge der Diole (b2), ein Molekulargewicht von 60 bis 500 g/mol aufweisen,
c2) von den Monomeren (a2) und (b2) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird,
d2) gegebenenfalls weiteren von den Monomeren (a2) bis (c1) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
e2) gegebenenfalls von den Monomeren (a2) bis (d2) verschiedenen einwertigen Verbindungen mit einer reaktiven Gruppe, bei der es sich um eine alkoholische Hydroxylgruppe, eine primäre oder sekundäre Aminogruppe oder eine Isocyanatgruppe handelt. oder
B2) um ein durch radikalisch initiierte Polymerisation hergestelltes Polymer (Polymer 3) handelt, welches aufgebaut ist aus
a3) 30 bis 100 Gew.-Teilen wenigstens eines Monomeren aus der Gruppe umfassend C₁- bis C₂₀-Alkyl(meth)acrylate, Vinylestern, von bis zu 20 C-Atome aufweisenden Carbonsäuren, ethylenisch ungesättigten Nitrilen, Vinylaromaten mit bis zu 20 C-Atomen, Vinylhalogeniden und aliphatischen Kohlenwasserstoffen mit 2 bis 8 C-Atomen und 1 oder 2 Doppelbindungen (Monomere a3) und
b3) 0 bis 70 Gew.-Teilen sonstigen, wenigstens eine ethylenisch ungesättigte Gruppe aufweisenden Verbindungen I (Monomere b3)
C) gegebenenfalls 0,1 bis 5 Gew.-% eines Emulgators
D) gegebenenfalls 0,1 bis 10 Gew.-% eines Aminoplast- oder Phenolharzes
E) gegebenenfalls 1 bis 30 Gew.-% eines Flammschutzmittels und
F) gegebenenfalls 1 bis 70 Gew.-% eines Kaolins.
G) gegebenenfalls 1 bis 30 Gew.-% eines Oleophobierungsmittels.

6. Verfahren zur Beschichtung von Gegenständen aus Metall, Kunststoff, Papier, Textil, Leder oder Holz, **dadurch gekennzeichnet, daß** man eine wässerige Dispersion nach den Ansprüchen 1 bis 7 in Form eines Films auf diese Gegenstände aufträgt und die Dispersion trocknet.

7. Verfahren zur Verklebung von Gegenständen aus Metall, Kunststoff, Papier, Textil, Leder oder Holz, **dadurch gekennzeichnet, daß** man eine wässerige Dispersion nach den Ansprüchen 1 bis 5 in Form eines Films auf einem dieser Gegenstände aufträgt und ihn vor oder nach dem Trocknen des Films mit einem anderen Gegenstand zusammenfügt.

8. Verfahren zur Imprägnierung von Gegenständen aus Textil, Leder oder Papier, **dadurch gekennzeichnet, daß** man diese Gegenstände mit der wässerigen Dispersion nach den Ansprüchen 1 bis 5 tränkt und anschließend trocknet.

9. Verfahren zur Herstellung von beschichteten Textilien, **dadurch gekennzeichnet, daß** man
I. eine wässerige Dispersion nach den Ansprüchen 1 bis 5 zu einer Paste verdickt oder mechanisch zu einem Schaum aufschäumt,
II. den Schaum oder die Paste auf das textile Trägermaterial direkt oder indirekt (transfer) aufträgt und trocknet und
III.gegebenenfalls den getrockneten Schaum komprimiert.

10. Gegenstände, die mit der wässerigen Dispersion nach den Ansprüchen 1 bis 5 beschichtet, verklebt oder imprägniert sind.

11. Verwendung der nach Anspruch 11 hergestellten beschichteten Textilien im Bautenschutz als Dachbahnen oder Abdichtbahnen.

## Claims

1. An aqueous dispersion comprising a polyurethane (1), composed of
a1) diisocyanates
a1.1) which comprise structural units of the formula (I)
-N=C=N- (I)
and, if desired, those
a1.2) which are free from structural units of the formula (I),
b1) diols, of which
b1.1) from 10 to 100 mol-%, based on the total amount of the diols (b1), have a molecular weight of from 500 to 5000 g/mol and
b1.2) from 0 to 90 mol-%, based on the total amount of the diols (b1), have a molecular weight of from 62 to 500 g/mol,
c1) monomers which are different from the monomers (a1) and (b1) and which have at least one isocyanate group or at least one isocyanate-reactive group and which, furthermore, carry at least one hydrophilic group or one potentially hydrophilic group, thereby rendering the polyurethanes dispersible in water,
d1) if desired, further polyfunctional compounds which are different from the monomers (a1) to (c1) and which have reactive groups which are alcoholic hydroxyls, primary or secondary amino groups or isocyanate groups, and
e1) if desired, monofunctional compounds which are different from the monomers (a1) to (d1) and which have a reactive group which is an alcoholic hydroxyl, a primary or secondary amino group or an isocyanate group.

2. An aqueous dispersion as claimed in claim 1, where the content of carbodiimide structural units is from 5 to 200 mmol/kg based on the polyurethane.

3. An aqueous dispersion as claimed in claim 1 or 2, where the polyisocyanate (a1.1) is tetramethylxylylene diisocyanate (TMXDI).

4. An aqueous dispersion as claimed in any of claims 1 to 3, where the diols (b1.1) are polyesterols.

5. An aqueous dispersion suitable for preparing coated textiles, comprising, based on the solids content,
A) from 10 to 100% by weight of a polyurethane (1) which carries hydrophilic groups which render the polyurethane dispersible in water
B) if desired, from 5 to 90% by weight of a polymer (B) which is
B1) a polyurethane (2) different from the polyurethane (1) and composed of
a2) diisocyanates containing no carbodiimide groups b2) diols, of which
b2.1) from 10 to 100 mol-%, based on the total amount of the diols (b1), have a molecular weight from 500 to 5000, and
b2.2) from 0 to 90 mol-%, based on the total amount of the diols (b2), have a molecular weight of from 60 to 500 g/mol,
c2) monomers which are different from the monomers (a2) and (b2) and which have at least one isocyanate group or at least one isocyanate-reactive group and which, furthermore, carry at least one hydrophilic group or one potentially hydrophilic group, thereby rendering the polyurethanes dispersible in water,
d2) if desired, further polyfunctional compounds which are different from the monomers (a2) to (c1) and which have reactive groups which are alcoholic hydroxyls, primary or secondary amino groups or isocyanate groups, and
e2) if desired, monofunctional compounds which are different from the monomers (a2) to (d2) and which have a reactive group which is an alcoholic hydroxyl, a primary or secondary amino group or an isocyanate group
or
B2) is a polymer prepared by free-radically initiated polymerization (polymer 3) which is composed of
a3) from 30 to 100 parts by weight of at least one monomer from the group consisting of C₁- to C₂₀-alkyl(meth)acrylates, vinyl esters of carboxylic acids having up to 20 carbon atoms, ethylenically unsaturated nitriles, vinylaromatic compounds having up to 20 carbon atoms, vinyl halides, and aliphatic hydrocarbons having 2 to 8 carbon atoms and 1 or 2 double bonds (monomers a3) and
b3) from 0 to 70 parts by weight of other compounds I having at least one ethylenically unsaturated group (monomers b3)
C) if desired, from 0.1 to 5% by weight of an emulsifier
D) if desired, from 0.1 to 10% by weight of an amino resin or phenolic resin
E) if desired; from 1 to 30% by weight of a flame retardant
F) if desired, from 1 to 70% by weight of a kaolin, and
G) if desired, from 1 to 30% by weight of an oleophobicizer.

6. A process for coating an article made from metal, plastic, paper, textile, leather or wood, which comprises applying an aqueous dispersion as claimed in any of claims 1 to 7 in the form of a film to said article and drying the dispersion.

7. A process for bonding an article made from metal, plastic, paper, textile, leather or wood, which comprises applying an aqueous dispersion as claimed in any of claims 1 to 5 in the form of a film to such an article and joining the article, before or after the film has dried, to another article.

8. A process for impregnating an article made from textile, leather or paper, which comprises soaking said article with an aqueous dispersion as claimed in any of claims 1 to 5 and then drying it.

9. A process for producing coated textiles, which comprises
I. subjecting an aqueous dispersion as claimed in any of claims 1 to 5 to thickening to form a paste or to mechanical foaming to form a foam,
II. applying the foam or paste to the textile substrate material directly or indirectly (transfer) and drying it, and
III.if appropriate, compressing the dried foam.

10. An article coated, bonded or impregnated with an aqueous dispersion as claimed in any of claims 1 to 5.

11. The use of a coated textile article produced as claimed in claim 9 in architectural preservation as a roofing membrane or sealing membrane.

## Revendications

1. Dispersions aqueuses contenant un polyuréthanne (1), constituées
a1) de diisocyanates,
a1.1) qui contiennent des unités de structure de la formule (I):
- N = C = N - (I)
et éventuellement
a1.2) de ceux qui sont exempts des unités de structure de la formule (I),
b1) de diols, dont
b1.1) 10 à 100 moles %, par rapport à la quantité totale des diols (b1), présentent un poids moléculaire de 500 à 5000, et
b1.2) 0 à 90 moles %, par rapport à la quantité totale des diols (b1), présentent un poids moléculaire de 62 à 500 g/mole,
c1) de monomères différents des monomères (a1) et (b1) et qui comportent au moins un groupe isocyanate ou au moins un groupe réactif vis-à-vis des groupes isocyanate et qui portent en outre au moins un groupe hydrophile ou un groupe potentiellement hydrophile, ce qui permet de produire le pouvoir de dispersion dans l'eau des polyuréthannes,
d1) éventuellement d'autres composés polyvalents différents des monomères (a1) à (c1), qui comportent des groupes réactifs, parmi des groupes hydroxyle alcooliques, des groupes amino primaires ou secondaires ou des groupes isocyanate, et
e1) éventuellement de composés monovalents différents des monomères (a1) à (d1), qui comportent un groupe réactif parmi un groupe hydroxyle alcoolique, un groupe amino primaire ou secondaire ou un groupe isocyanate.

2. Dispersions aqueuses suivant la revendication 1, dans lesquelles la teneur en unités de structure carbodiimide est de 5 à 200 mmoles/kg, par rapport au polyuréthanne.

3. Dispersions aqueuses suivant l'une des revendications 1 et 2, dans lesquelles, en ce qui concerne les polyisocyanates (a1.1), il s'agit de diisocyanate de tétraméthylxylylène (TMXDI).

4. Dispersions aqueuses suivant l'une des revendications 1 à 3, dans lesquelles, en ce qui concerne les diols (b1.1), il s'agit de polyesterols.

5. Dispersions aqueuses, qui sont appropriées pour la préparation de matières textiles enduites, contenant, par rapport à la teneur en matières solides,
A) 10 à 100% en poids d'un polyuréthanne (1), qui porte des groupes hydrophiles qui permettent le pouvoir de dispersion dans l'eau du polyuréthanne,
B) éventuellement 5 à 90% en poids d'un polymère (B), pour lequel il s'agit
B1) d'un polyuréthanne (2) qui est différent du polyuréthanne (1) et qui est constitué
a2) de diisocyanates, qui ne contiennent pas de groupe carbodiimide, b2) de diols, dont
b2.1) 10 à 100 moles %, par rapport à la quantité totale des diols (b2), présentent un poids moléculaire de 500 à 5000, et
b2.2) 0 à 90 moles %, par rapport à la quantité totale des diols (b2), présentent un poids moléculaire de 60 à 500 g/mole,
c2) de monomères différents des monomères (a2) et (b2), qui comportent au moins un groupe isocyanate ou au moins un groupe réactif vis-à-vis des groupes isocyanate et qui portent en outre au moins un groupe hydrophile ou un groupe potentiellement hydrophile, ce qui permet de produire le pouvoir de dispersion dans l'eau des polyuréthannes,
d2) éventuellement d'autres composés polyvalents différents des monomères (a2) à (c2) qui comportent des groupes réactifs, parmi des groupes hydroxyle alcooliques, des groupes amino primaires ou secondaires ou des groupes isocyanate, et
e2) éventuellement de composés monovalents différents des monomères (a2) à (d2), qui comportent un groupe réactif, parmi un groupe hydroxyle alcoolique, un groupe amino primaire ou secondaire ou un groupe isocyanate,
ou
B2) d'un polymère (polymère 3) qui est préparé par polymérisation initiée par voie radicalaire et qui est constitué
a3) de 30 à 100 parties en poids d'au moins un monomère du groupe comprenant des (méth)acrylates d'alkyle en C₁-C₂₀, des esters vinyliques, des acides carboxyliques présentant jusqu'à 20 atomes de C, des nitriles éthyléniquement insaturés, des substances vinyl-aromatiques comportant jusqu'à 20 atomes de C, des halogénures de vinyle et des hydrocarbures aliphatiques comportant 2 à 8 atomes de C et 1 ou 2 doubles liaisons (monomères a3), et
b3) de 0 à 70 parties en poids d'autres composés I (monomères b3) présentant au moins un groupe éthyléniquement insaturé,
C) éventuellement 0,1 à 5% en poids d'un agent émulsionnant,
D) éventuellement 0,1 à 10% en poids d'une résine aminoplaste ou phénolique,
E) éventuellement 1 à 30% en poids d'un agent ignifuge et
F) éventuellement 1 à 70% en poids d'un kaolin, et
G) éventuellement 1 à 30% en poids d'un agent rendant oléophobe.

6. Procédé d'enduction d'objets en métal, matière synthétique, papier, matière textile, cuir ou bois, **caractérisé en ce qu'**on applique sur ces objets, sous la forme d'un film, une dispersion aqueuse suivant l'une des revendications 1 à 5, et on sèche la dispersion.

7. Procédé de collage d'objets en métal, matière synthétique, papier, matière textile, cuir ou bois, **caractérisé en ce qu'**on applique sur un de ces objets, sous la forme d'un film, une dispersion aqueuse suivant l'une des revendications 1 à 5 et **en ce qu'**on le réunit à un autre objet avant ou après le séchage du film.

8. Procédé d'imprégnation d'objets en matière textile, cuir ou papier, **caractérisé en ce qu'**on imprègne ces objets avec la dispersion aqueuse suivant l'une des revendications 1 à 5 et **en ce qu'**ensuite on les sèche.

9. Procédé de préparation de matières textiles enduites, **caractérisé en ce que**
I. on épaissit une dispersion aqueuse suivant l'une des revendications 1 à 5 de manière à former une pâte et on la fait mousser mécaniquement en une mousse,
II. on applique la mousse ou pâte directement ou indirectement (transfert) sur la matière de support textile et on la sèche, et
III. on comprime éventuellement la mousse séchée.

10. Objets qui sont enduits, collés ou imprégnés avec la dispersion aqueuse suivant l'une des revendications 1 à 5.

11. Utilisation des matières textiles enduites, préparées selon la revendication 9, dans la protection des bâtiments, comme bandes pour toiture ou bandes d'étanchéification.
